(19) **Europäisches Patentamt / European Patent Office / Office européen des brevets**

(11) **EP 4 746 305 A1**

(12) **EUROPEAN PATENT APPLICATION**
published in accordance with Art. 153(4) EPC

(43) Date of publication:
**20.05.2026 Bulletin 2026/21**

(21) Application number: **24839961.0**

(22) Date of filing: **01.07.2024**

(51) International Patent Classification (IPC):
$H04B\ 7/0456^{(2017.01)}$    $H04B\ 7/0404^{(2017.01)}$
$H04W\ 72/1268^{(2023.01)}$    $H04W\ 72/231^{(2023.01)}$
$H04W\ 72/232^{(2023.01)}$    $H04W\ 8/24^{(2009.01)}$
$H04L\ 5/00^{(2006.01)}$

(52) Cooperative Patent Classification (CPC):
H04B 7/0404; H04B 7/0456; H04L 5/00;
H04W 8/24; H04W 72/1268; H04W 72/231;
H04W 72/232

(86) International application number:
**PCT/KR2024/009196**

(87) International publication number:
**WO 2025/014148 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.07.2023 KR 20230089914**

(71) Applicant: **LG Electronics Inc.**
**Yeongdeungpo-gu**
**Seoul 07336 (KR)**

(72) Inventors:
• **PARK, Haewook**
  **Seoul 06772 (KR)**
• **KIM, Kijun**
  **Seoul 06772 (KR)**
• **KANG, Jiwon**
  **Seoul 06772 (KR)**
• **GO, Seongwon**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING AND RECEIVING SIGNAL IN WIRELESS COMMUNICATION SYSTEM**

(57) A method for transmitting a signal by a terminal in a wireless communication system according to at least one of embodiments disclosed in the present specification may comprise: receiving a sounding reference signal (SRS) configuration through higher layer signaling; performing SRS resource mapping for a plurality of SRS antenna ports on the basis of the SRS configuration; and transmitting an SRS through the plurality of SRS antenna ports on the basis of the SRS resource mapping, wherein, on the basis of the number of the plurality of SRS antenna ports being three, the terminal performs the SRS resource mapping only for a total of three SRS antenna ports on the basis of an SRS resource mapping scheme defined for four SRS antenna ports.

**FIG. 13**

## Description

### TECHNICAL FIELD

The present disclosure relates to a wireless communication system, and more particularly, to a method and apparatus for transmitting or receiving a downlink/uplink radio signal in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### Technical Problem

An object of the present disclosure is to provide a method and device for performing a process of transmitting and receiving a wireless signal more accurately and efficiently.

The objects to be obtained are not limited thereto, and other objects may be inferred from the disclosure of this specification.

### Technical Solution

In an aspect of the present disclosure, provided herein is a method for transmitting a signal by a user equipment (UE) in a wireless communication system. The method includes: receiving a sounding reference signal (SRS) configuration through higher-layer signaling; performing SRS resource mapping for a plurality of SRS antenna ports based on the SRS configuration; and transmitting an SRS through the plurality of SRS antenna ports based on the SRS resource mapping. Based on a number of the plurality of SRS antenna ports being three, the UE may perform the SRS resource mapping only for the three SRS antenna ports based on an SRS resource mapping scheme defined for four SRS antenna ports.

The three SRS antenna ports may be multiplexed based on three cyclic-shift values. The three cyclic-shift values may be a subset of four cyclic-shift values defined for the four SRS antenna ports.

The three SRS antenna ports may be multiplexed based on two cyclic-shift values and two comb-offset values. Among the three SRS antenna ports, (i) a first cyclic-shift value and a first comb-offset value may be applied to a first SRS antenna port, (ii) a second cyclic-shift value and the first comb-offset value may be applied to a second SRS antenna port, and (iii) one of the first cyclic-shift value and the second cyclic-shift value and a second comb-offset value may be applied to a third SRS antenna port.

The UE may perform SRS sequence generation for a plurality of SRS antenna ports based on the SRS configuration. Based on a number of the plurality of SRS antenna ports being three, the UE may perform the SRS sequence generation only for the three SRS antenna ports based on an SRS sequence generation scheme defined for four SRS antenna ports.

Three SRS sequences may be generated for the three SRS antenna ports based on at least two cyclic-shift values.

The SRS transmission may be performed excluding a last SRS antenna port among the four SRS antenna ports.

The SRS transmission may be associated with uplink transmission based on a non-coherent codebook.

The non-coherent codebook may include precoding matrices constructed for each rank based on Table A.

[Table A]

| Rank 1 | $\begin{bmatrix} 1 \\ 0 \\ 0 \end{bmatrix}$ | $\begin{bmatrix} 0 \\ 1 \\ 0 \end{bmatrix}$ | $\begin{bmatrix} 0 \\ 0 \\ 1 \end{bmatrix}$ |
|---|---|---|---|

(continued)

| Rank 2 | $\begin{bmatrix} 1 & 0 \\ 0 & 1 \\ 0 & 0 \end{bmatrix}$ | $\begin{bmatrix} 1 & 0 \\ 0 & 0 \\ 0 & 1 \end{bmatrix}$ | $\begin{bmatrix} 0 & 0 \\ 1 & 0 \\ 0 & 1 \end{bmatrix}$ |
| --- | --- | --- | --- |
| Rank 3 | | $\begin{bmatrix} 1 & 0 & 0 \\ 0 & 1 & 0 \\ 0 & 0 & 1 \end{bmatrix}$ | |

In another aspect of the present disclosure, provided herein is a computer-readable recording medium having recorded thereon a program for executing the above-described signal transmission method.

In another aspect of the present disclosure, provided herein is an apparatus for wireless communication. The apparatus includes: a memory configured to store instructions; and a processor configured to perform operations by executing the instructions. The operations performed by the processor include: receiving a sounding reference signal (SRS) configuration through higher-layer signaling; performing SRS resource mapping for a plurality of SRS antenna ports based on the SRS configuration; and transmitting an SRS through the plurality of SRS antenna ports based on the SRS resource mapping. Based on a number of the plurality of SRS antenna ports being three, the SRS resource mapping may be performed only for the three SRS antenna ports based on an SRS resource mapping scheme defined for four SRS antenna ports.

The apparatus may further include a transceiver.

The apparatus may be a user equipment (UE) operating in a wireless communication system.

The apparatus may be a processing device configured to control a user equipment (UE) operating in a wireless communication system.

In another aspect of the present disclosure, provided herein is a method for receiving a signal by a base station (BS) in a wireless communication system. The method includes: transmitting a sounding reference signal (SRS) configuration to a user equipment (UE) through higher-layer signaling; and receiving an SRS through a plurality of SRS antenna ports of the UE based on the SRS configuration. Based on a number of the plurality of SRS antenna ports being three, the BS may determine SRS resources mapped for the three SRS antenna ports based on an SRS resource mapping scheme defined for four SRS antenna ports.

In a further aspect of the present disclosure, provided herein is a base station (BS) for wireless communication. The BS includes: a memory configured to store instructions; and a processor configured to perform operations by executing the instructions. The operations performed by the processor include: transmitting a sounding reference signal (SRS) configuration to a user equipment (UE) through higher-layer signaling; and receiving an SRS through a plurality of SRS antenna ports of the UE based on the SRS configuration. Based on a number of the plurality of SRS antenna ports being three, the BS may determine SRS resources mapped for the three SRS antenna ports based on an SRS resource mapping scheme defined for four SRS antenna ports.

**Advantageous Effects**

According to an embodiment, wireless signal transmission and reception may be efficiently performed in a wireless communication system.

It will be appreciated by persons skilled in the art that the effects that can be achieved with the disclosure are not limited to what has been particularly described hereinabove and other advantages of the disclosure will be more clearly understood from the following detailed description taken in conjunction with the accompanying drawings.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 illustrates a multi-TRP transmission.

FIG. 9 illustrates an exemplary partial coherent antenna configuration.

FIG. 10 illustrates another exemplary partial coherent antenna configuration.

FIG. 11 is an example of a 3-Tx uplink antenna layout of a user equipment (UE).

FIG. 12 illustrates an example implementation of operations of a network and a UE according to an embodiment.

FIG. 13 illustrates an implementation of an operation of a UE in a wireless communication system according to an embodiment.

FIG. 14 illustrates an implementation of an operation of a BS in a wireless communication system according to an embodiment.

FIGS. 15 to 18 illustrate a communication system 1 and wireless devices applicable to the disclosure.

## DETAILED DESCRIPTION

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

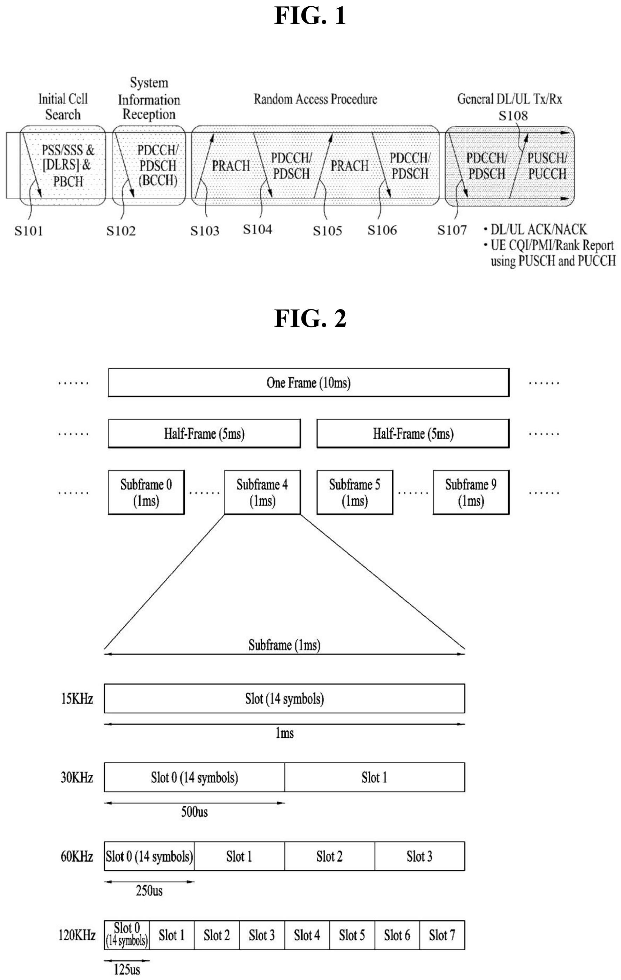

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

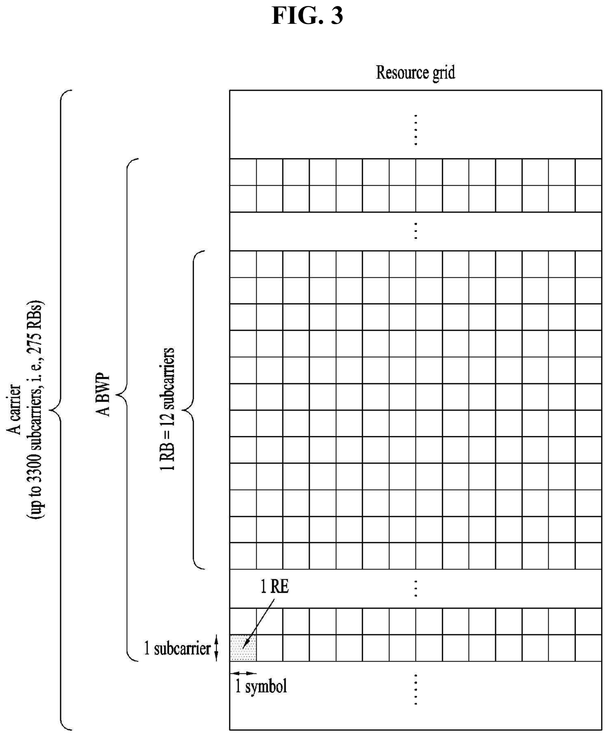

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

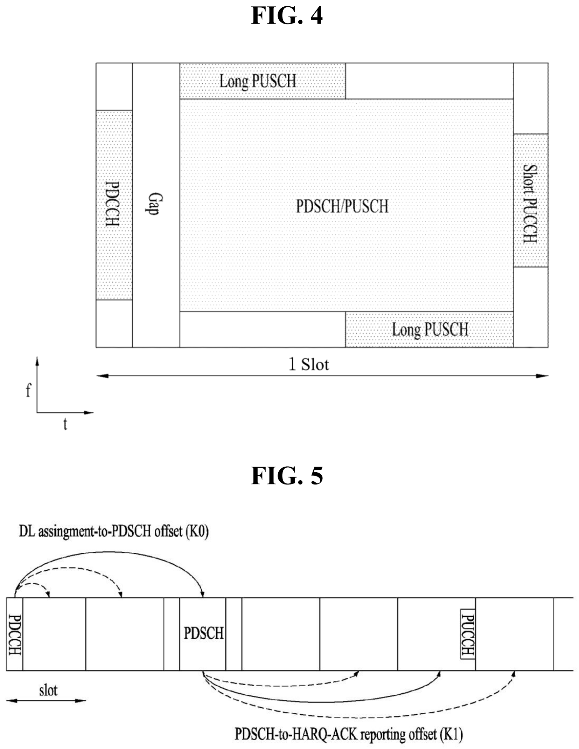

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.

monitoringSlotPeriodicityAndOffset: A PDCCH monitoring periodicity (in slots) and a PDCCH monitoring offset (in slots).

monitoringSymbolsWithinSlot: PDCCH monitoring symbols in a slot (e.g., the first symbol(s) of a CORESET).

nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |

(continued)

| Type | Search Space | RNTI | Use Case |
|---|---|---|---|
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

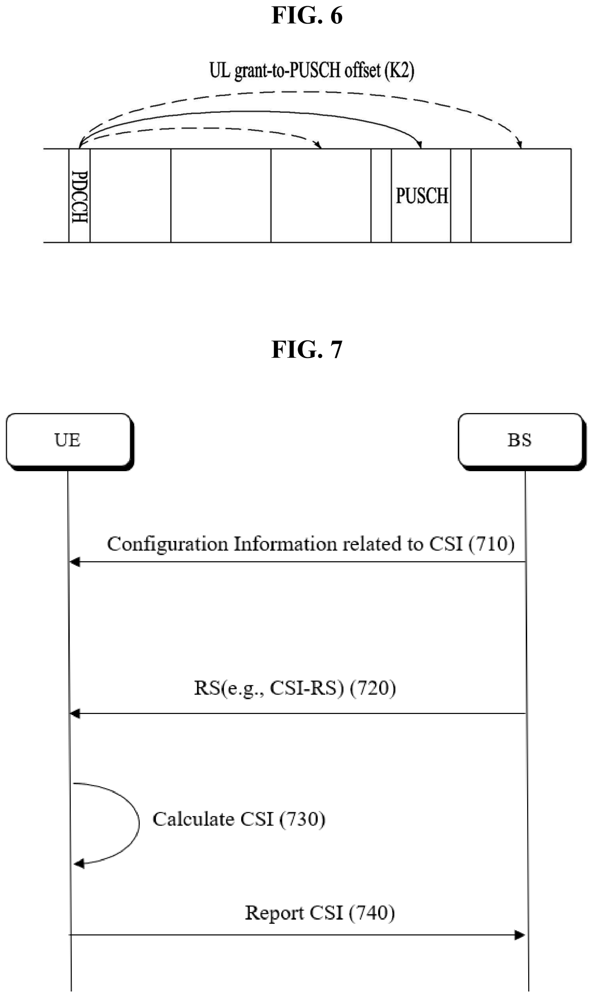

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

<u>SRS (sounding reference signal)</u>

An SRS is a UL reference signal that is transmitted by a UE and received by a BS. The BS may perform link adaptation, DL channel estimation using channel reciprocity characteristics, UL beam management, UL precoding, and/or acquisition of UL measurements based on the SRS.

The UE may receive SRS configuration information (e.g., TS 38.331 SRS-Config IE) provided by the BS and may determine parameters for SRS transmission based on the information. The SRS configuration is composed of lists of SRS-Resources, SRS-PosResources, SRS-ResourceSets, and SRS-PosResourceSets, and SRS-ResourceSets and SRS-PosResourceSets respectively include sets of SRS-Resources and SRS-PosResources.

Table 6 is an excerpt of SRS-Config IE in TS 38.331.

[Table 6]

```
SRS-ResourceSet ::=                 SEQUENCE {
    srs-ResourceSetId          SRS-ResourceSetId,
    srs-ResourceIdList      SEQUENCE (SIZE(1..maxNrofSRS-ResourcesPerSet)) OF SRS-ResourceId
    resourceType                  CHOICE {
        aperiodic                  SEQUENCE {
            aperiodicSRS-ResourceTrigger        INTEGER (1..maxNrofSRS-TriggerStates-1),
            csi-RS                          NZP-CSI-RS-ResourceId
            slotOffset                  INTEGER (1..32)
            ...,
            [[aperiodicSRS-ResourceTriggerList             SEQUENCE (SIZE(1..maxNrofSRS-TriggerStates-2)) OF INTEGER
(1..maxNrofSRS-TriggerStates-1)
            ]]     },
        semi-persistent             SEQUENCE {
            associatedCSI-RS        NZP-CSI-RS-ResourceId
            ...     },
        periodic                  SEQUENCE {
            associatedCSI-RS                NZP-CSI-RS-ResourceId
            ...     }   },
    usage {beamManagement, codebook, nonCodebook, antennaSwitching},
    alpha                       Alpha
    p0                      INTEGER (-202..24)
    pathlossReferenceRS             PathlossReferenceRS-Config
    srs-PowerControlAdjustmentStates       ENUMERATED { sameAsFci2, separateClosedLoop}
    ...,
    [[pathlossReferenceRSList-r16   SetupRelease { PathlossReferenceRSList-r16}       ]] }
```

```
SRS-Resource ::=                SEQUENCE {
  srs-ResourceId                  SRS-ResourceId,
  nrofSRS-Ports                   ENUMERATED {port1, ports2, ports4},
  ptrs-PortIndex                  ENUMERATED {n0, n1 }
  transmissionComb                CHOICE {
    n2                            SEQUENCE {
      combOffset-n2                 INTEGER (0..1),
      cyclicShift-n2                INTEGER (0..7)
    },
    n4                            SEQUENCE {
      combOffset-n4                 INTEGER (0..3),
      cyclicShift-n4                INTEGER (0..11)
    }  },
  resourceMapping                 SEQUENCE {
    startPosition                 INTEGER (0..5),
    nrofSymbols                   ENUMERATED {n1, n2, n4},
    repetitionFactor              ENUMERATED {n1, n2, n4}
  },
  freqDomainPosition              INTEGER (0..67),
  freqDomainShift                 INTEGER (0..268),
  freqHopping                     SEQUENCE {
    c-SRS                         INTEGER (0..63),
    b-SRS                         INTEGER (0..3),
    b-hop                         INTEGER (0..3)
  },
  groupOrSequenceHopping          ENUMERATED { neither, groupHopping, sequenceHopping },
  resourceType                    CHOICE {
    aperiodic                     SEQUENCE {
      ...
    },
    semi-persistent               SEQUENCE {
      periodicityAndOffset-sp         SRS-PeriodicityAndOffset,
      ...
    },
    periodic                      SEQUENCE {
      periodicityAndOffset-p          SRS-PeriodicityAndOffset,
      ...
    }  },
  sequenceId                      INTEGER (0..1023),
  spatialRelationInfo             SRS-SpatialRelationInfo
  ...,
  [[   resourceMapping-r16            SEQUENCE {
    startPosition-r16             INTEGER (0..13),
    nrofSymbols-r16                 ENUMERATED {n1, n2, n4},
```

| repetitionFactor-r16 | ENUMERATED {n1, n2, n4} |
| --- | --- |
| } ]] } | |

An SRS may be classified into three resource types depending on a time resource configuration and a transmission scheme.

When the resource type of an SRS is configured as periodic, the UE may determine a location at which an SRS resource is transmitted based on a period and an offset configured through RRC for the SRS resource. When SRS transmission is configured, the UE may periodically transmit the SRS without separate signaling.

When the resource type of an SRS is configured as semi-persistent, the UE may determine a location at which an SRS resource is transmitted based on a period and an offset configured through RRC for the SRS resource. When SRS transmission is activated by a MAC CE, the UE may start periodic transmission of the indicated SRS. When SRS transmission is deactivated by the MAC CE, the UE may stop the SRS transmission.

When the resource type of an SRS is configured as aperiodic, the UE may transmit the indicated SRS by applying a location of an offset configured through RRC based on a reception time of DCI that indicates triggering for a corresponding SRS resource set.

DCI (e.g., DCI format 0_1 or 0_2 for UL scheduling DCI) includes an SRS resource indicator (SRI) and an SRS request. SRS resources configured within an SRS resource set associated with a higher-layer parameter 'usage' may be indicated by an SRI field. In addition, 'spatialRelationInfo' may be configured for each SRS resource, and the value may be one of {CRI, SSB, SRI}.

i) In codebook-based PUSCH transmission, the UE may determine a PUSCH transmission precoder based on an SRI, a Transmit Precoding Matrix Indicator (TPMI), and a transmission rank in the DCI. The TPMI is used to indicate a precoder to be applied across antenna ports and corresponds to an SRS resource selected by the SRI when multiple SRS resources are configured. Alternatively, when a single SRS resource is configured, the TPMI is used to indicate a precoder to be applied across antenna ports and corresponds to the single SRS resource. A transmission precoder is selected from a UL codebook having the same number of antenna ports as a higher-layer parameter 'nrofSRS-Ports'. When a higher-layer parameter 'txConfig' is configured as 'codebook', the UE may be configured with at least one SRS resource. An SRI indicated in slot n is associated with the most recent transmission of an SRS resource identified by the SRI, where the SRS resource precedes a PDCCH carrying the SRI (i.e., slot n).

ii) In non-codebook-based PUSCH transmission, when multiple SRS resources are configured, the UE may determine a PUSCH precoder and a transmission rank based on a wideband SRI, where the SRI is provided by an SRS resource indicator in DCI or by a higher-layer parameter 'srs-ResourceIndicator'. The UE may use one or multiple SRS resources for SRS transmission, where the number of SRS resources may be configured for simultaneous transmission within the same RB based on UE capability. Only a single SRS port is configured for each SRS resource. Only a single SRS resource may be configured with a higher-layer parameter 'usage' set as 'nonCodebook'. The maximum number of SRS resources that may be configured for non-codebook-based UL transmission is four. An SRI indicated in slot n is associated with the most recent transmission of an SRS resource identified by the SRI, where the SRS transmission precedes a PDCCH carrying the SRI (i.e., slot n).

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a medium access control (MAC) control element (CE) indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of multiple TCI state configurations may be configured for the UE through a higher layer parameter PDSCH-Config. Each TCI state is associated with a QCL configuration parameter between one or two DL reference signals and the DM-RS port of a PDSCH. The QCL may include qc1-Type1 for a first DL RS and qcl-Type2 for a second DL RS. The QCL type may correspond to one of the followings.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Operations related to multiple transmission and reception points (M-TRPs)

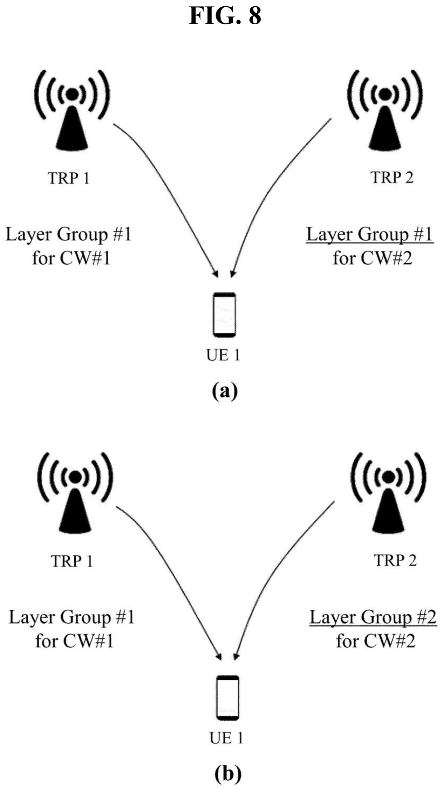

FIG. 8 illustrates multi-TRP (M-TRP) transmission. Referring to FIG. 8-(a), a group of layers transmitting the same codeword (CW) (or TB) correspond to different TRPs. Referring to FIG. 8-(b), different CWs are transmitted through layer groups of different TRPs. In this case, it may be assumed that the TBs corresponding to CW #1 and CW #2 in the drawing are the same. In other words, CW #1 and CW #2 mean that the same TB is converted into different CWs through channel coding, etc., by different TRPs. Therefore, it may be considered as an example of repeated transmission of the same TB. In the case of FIG. 8-(b), there may be a drawback of a higher coding rate corresponding to the TB, compared to FIG. 8-(a). However, FIG. 8-(b) has an advantage that, depending on the channel environment, the coding rate may be adjusted by indicating different values of redundancy version (RV) for encoded bits generated from the same TB, or the modulation order of each CW may be adjusted.

According to the method illustrated in FIGS. 8-(a) and 8-(b), the same TB is repeatedly transmitted through different layer groups. In addition, as each layer group is transmitted by different TRPs/panels, the probability that the UE receives data successfully may increase. This method is referred to as a spatial division multiplexing (SDM) based M-TRP URLLC transmission. The layers belonging to different layer groups are transmitted through DMRS ports that belong to different DMRS code division multiplexing (CDM) groups.

Although the aforementioned M-TRP-related content has been explained based on the SDM method using different layers, it may be extended and applied to an FDM method based on different frequency domain resources (e.g., RB/PRB sets) and/or a TDM method based on different time domain resources (e.g., slots, symbols, sub-symbols, etc.).

## MTRP URLLC

In the methods proposed below, DL MTRP-URLLC means transmitting the same data/DCI by using multiple TRPs with different layer/time/frequency resources. For example, TRP 1 transmits the same data/DCI from resource 1 and TRP 2 transmits the same data/DCI from resource 2. A UE configured with a DL MTRP-URLLC transmission method receives the same data/DCI by using different layer/time/frequency resources. In this case, the UE is instructed by a BS which QCL RS/type (i.e., DL TCI state) to use in the layer/time/frequency resources receiving the same data/DCI. For example, when the same data/DCI is received from resource 1 and resource 2, a DL TCI state used by resource 1 and a DL TCI state used by resource 2 are indicated. The UE may receive the same data/DCI through both resource 1 and resource 2, and thus may obtain high reliability. This DL MTRP URLLC may be applied to PDSCH/PDCCH.

In contrast, UL MTRP-URLLC means receiving the same data/UCI from one UE by using multiple TRPs with different layer/time/frequency resources. For example, TRP 1 receives the same data/DCI from the UE in resource 1, and TRP 2 receives the same data/DCI from the UE in resource 2, and then shares the received data/DCI through the connected backhaul link between TRPs. A UE configured with a UL MTRP-URLLC transmission method receives the same data/UCI by using different layer/time/frequency resources. In this case, the UE is instructed by a BS which Tx beam and which Tx power (i.e., UL TCI state) to use in the layer/time/frequency resources transmitting the same data/UCI. For example, when the same data/UCI is transmitted from resource 1 and resource 2, a UL TCI state used by resource 1 and a UL TCI state used by resource 2 are indicated. This UL MTRP URLLC may be applied to PUSCH/PUCCH.

In the methods proposed below, using (mapping) a specific TCI state (or TCI) when receiving data/DCI/UCI for a certain frequency/time/spatial resource may mean that, in the case of DL, a channel is estimated from a DMRS by using a QCL type and QCL RS indicated by the corresponding TCI state in the frequency/time/spatial resource, and data/DCI is received/demodulated with the estimated channel. For UL, this may mean transmitting/modulating DMRS and data/UCI by using the Tx beam and/or Tx power indicated by the corresponding TCI state in that frequency/time/space resource.

The UL TCI state contains Tx beam or Tx power information of the UE, and instead of the TCI state, spatial relation information, and the like may be configured to the UE through other parameters. The UL TCI state may be directly indicated in the UL grant DCI or may mean spatial relation information of the SRS resource indicated through an SRI field of the UL grant DCI. Alternatively, this may mean OL Tx power control parameter connected to a value indicated via an SRI field of the UL grant DCI (j: index for open loop parameters Po & alpha (maximum 32 parameter value sets per cell), q_d: index of DL RS resource for PL measurement (maximum 4 measurements per cell), l: closed loop power control process index (maximum 2 processes per cell).

On the other hand, MTRP-eMBB means that different data is transmitted using different layers/times/frequencies of Multiple TRPs, and it is assumed that a UE configured with the MTRP-eMBB transmission method is instructed to multiple TCI states by DCI and that the data received using the QCL RS of each TCI state is different data.

The UE may determine whether it is MTRP URLLC transmission/reception or MTRP eMBB transmission/reception by using the RNTI for MTRP-URLLC and the RNTI for MTRP-eMBB separately. That is, when a CRC of DCI is masked using an RNTI for URLLC, it is identified as URLLC transmission, and when the CRC of DCI is masked using the RNTI for eMBB, it is identified as eMBB transmission. Alternatively, the BS may configure the UE to transmit/receive MTRP URLLC or to transmit/receive MTRP eMBB through other new signaling.

In this specification, for convenience of explanation, the proposed method is applied assuming cooperative transmission/reception between 2 TRPs, but it may also be applied to a multi-TRP environment of 3 or more, and may be expanded to a multi-panel environment. Different TRPs may be recognized as different TCI states to the UE, and when the UE receives/transmits data/DCI/UCI by using TCI state 1, it means that the UE receives/transmits data/DCI/UCI from/to TRP 1.

The proposal in this specification may be utilized in situations in which MTRP performs cooperative transmission of PDCCH (repeated transmission or divided transmission of the same PDCCH), and some proposals may also be utilized in situations in which MTRP performs cooperative transmission of PDSCH or cooperative reception of PUSCH/PUCCH.

Hereinafter, the meaning that a plurality of BSs (i.e., MTRP) repeatedly transmit the same PDCCH may mean that the same DCI is transmitted through a plurality of PDCCH candidates, and is the same as the meaning that the plurality of BSs repeatedly transmit the same DCI. The same DCI may mean two DCIs with the same DCI format/size/payload. Alternatively, when the scheduling results are the same even though the payloads of the two DCIs are different, the two DCIs may be the same DCI. For example, a time domain resource allocation (TDRA) field of DCI relatively determines the slot/symbol position of data and the slot/symbol position of A/N based on a time of reception of DCI, and when the DCI received at time n and the DCI received at time n+1 inform the UE of the same scheduling result, TDRA fields of the two DCIs may be different, and as a result, the DCI payloads may inevitably be different. The number of repetitions R may be directly instructed by the BS to the UE or mutually agreed upon. Alternatively, even if the payloads of two DCIs are different and the scheduling results are not the same, the two DCIs may be the same DCI when the scheduling result of one DCI is a subset of the scheduling result of the other DCI. For example, when the same data is TDM-transmitted N times, DCI 1 received before first data indicates data repetition N times, and DCI 2 received after the first data and before second data indicates data repetition N-1 times. Scheduling data of DCI 2 may be a subset of the scheduling data of DCI 1, and both DCIs are scheduling for the same data, and thus the two DCIs may also be the same DCI in this case.

Hereinafter, the meaning that a plurality of BSs (i.e. MTRP) divide and transmit the same PDCCH may mean, for example, that one DCI is transmitted through one PDCCH candidate, but some resources for which the PDCCH candidate is defined are transmitted by TRP 1 and the remaining resources are transmitted by TRP 2. For example, when a PDCCH candidate corresponding to aggregation levels m1+m2 is divided and transmitted by TRP 1 and TRP 2, the PDCCH candidate is divided into PDCCH candidate 1 corresponding to aggregation level m1 and PDCCH candidate 2 corresponding to aggregation level m2, and TRP 1 transmits PDCCH candidate 1 and TRP 2 transmits PDCCH candidate 2 by using different time/frequency resources. After receiving PDCCH candidate 1 and PDCCH candidate 2, the UE generates a PDCCH candidate corresponding to aggregation level m1+m2 and attempts DCI decoding.

There may be two implementation methods when the same DCI is divided and transmitted in multiple PDCCH candidates.

First, the DCI payload (control information bits + CRC) is encoded through a single channel encoder (e.g., polar encoder), and the resulting coded bits are divided and transmitted by two TRPs. In this case, the coded bits transmitted by each TRP may encode the entire DCI payload or only a portion of the DCI payload. Second, the DCI payload (control information bits + CRC) is divided into two DCIs (DCI 1 and DCI 2) and each of the two DCIs is decoded through a channel encoder (e.g., polar encoder). Then, the two TRPs transmit coded bits corresponding to DCI 1 and coded bits corresponding to DCI 2, respectively.

Whether the PDCCH is transmitted repeatedly or in parts, it may be understood that the PDCCH is transmitted multiple times over several transmission occasions (i.e., TO), and in this case, TO means a specific time/frequency resource unit in which the PDCCH is transmitted. For example, when a PDCCH is transmitted multiple times (to a specific RB) across slots 1, 2, 3, and 4, TO may mean each slot, when a PDCCH is transmitted multiple times (in a specific slot) across RB sets 1, 2, 3, and 4, TO may mean each RB set, or when a PDCCH is transmitted multiple times across different times and frequencies, TO may mean each time/frequency resource. The TCI state used for DMRS channel estimation may be configured differently for each TO, and TOs with different TCI states may be assumed to have been transmitted by different TRPs/panels. The fact that a plurality of BSs repeatedly transmit or divide the PDCCH means that the PDCCH is transmitted across multiple TOs and that a union of the TCI states configured in the TOs includes two or more TCI states. For example, when a PDCCH is transmitted over TO 1,2,3,4, TCI state 1,2,3,4 may be configured for TO 1,2,3,4 respectively, which means that TRP i cooperatively transmits a PDCCH over TO i.

Hereinafter, the meaning that a UE repeatedly transmits the same PUSCH for reception by a plurality of BSs (i.e., MTRP) may mean that the same data is transmitted through multiple PUSCHs, and each PUSCH may be transmitted optimized for a UL channel of a different TRP. For example, a UE repeatedly transmits the same data through PUSCH 1 and 2, and PUSCH 1 is transmitted using UL TCI state 1 for TRP 1, and link adaptation such as precoder/MCS is also scheduled and transmitted with values optimized for the channel of TRP 1. PUSCH 2 transmits using UL TCI state 2 for TRP 2, and link adaptation such as precoder/MCS is also scheduled and transmitted with values optimized for the channel of TRP 2. In this case, PUSCH 1 and 2, which are repeatedly transmitted, may be transmitted at different times and may be TDM, FDM, or SDM.

Hereinafter, the meaning that a UE divides and transmits the same PUSCH so that multiple BSs (i.e., MTRP) may perform reception, which means that one data may be transmitted through one PUSCH, but the resources allocated to the PUSCH may be split and transmitted in an optimized manner on the UL channels of different TRPs. For example, a UE transmits the same data through a 10 symbol PUSCH, and the first 5 symbols are transmitted by using UL TCI state 1 for TRP 1, and link adaptation such as precoder/MCS is also scheduled and transmitted with values optimized for the channel of TRP 1. The remaining 5 symbols transmits using UL TCI state 2 for TRP 2, and link adaptation such as precoder/MCS is also scheduled and transmitted with values optimized for the channel of TRP 2. In the above example, one PUSCH is divided into time resources and transmission toward TRP 1 and transmission toward TRP 2 are TDM-ed, but transmission may also be performed using an FDM/SDM method.

Similar to PUSCH transmission, a PUCCH may also be transmitted repeatedly by the UE for reception by multiple BSs (i.e. MTRP) or the same PUCCH may be divided and transmitted.

## Antenna Coherency

An antenna structure may be broadly divided into three types depending on whether coherency between antenna ports may be maintained.

- Non-coherent: Coherency may not be maintained between all antenna ports.
- Partial-coherent: Coherency may be maintained between some antenna ports.
- Full-coherent: Coherency may be maintained between all antenna ports.

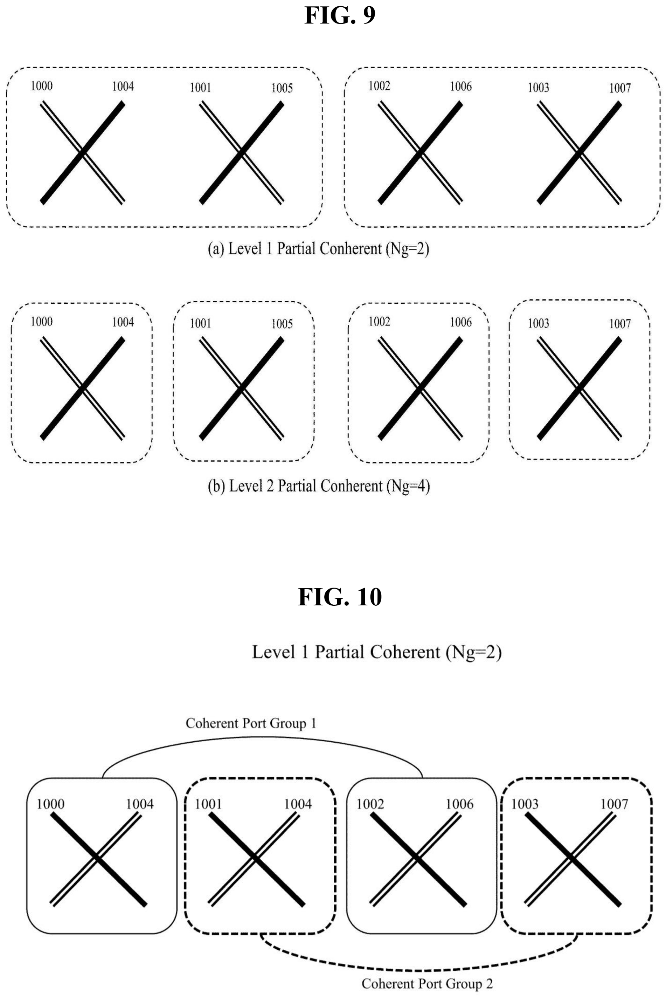

For 8Tx UL, there may be two partial-coherent types as shown in FIG. 9.

FIG. 9 illustrates an example of an 8Tx Partial-coherent antenna structure. In each of FIG. 9 (a)/(b), dotted lines represent a coherent port group. Ng is the number of coherent port groups.

That is, Ng=2 means there are two coherency antenna groups (each antenna group includes four antenna ports), and Ng=4 means there are four coherency antenna groups (each antenna group includes two antenna ports). Here, an antenna group may also mean an antenna panel.

Ng=2 may be referred to as coherent group level11, and Ng=4 may be referred to as coherent group level12.

FIG. 10 illustrates another example of an antenna configuration corresponding to 8Tx Partial-coherent level 1. In detail, compared to FIG. 9(a), FIG. 10 shows a case in which port grouping is different according to a port index at Partial-coherent level 1.

For reference, in the case of Full-coherent TPMI, all ports may be grouped into one coherent port group, and in the case of non-coherent, there is only one coherent port in the coherent port group. For example, in the case of a coherent port group, it may be a set of ports in which coherency is maintained from SRS transmission to PUSCH transmission. Each coherent port group may correspond to each panel. Additionally/alternatively, a related SRS resource or SRS resource set may be separately configured for each coherent port group.

## UL transmission based on 3-Tx antenna port

In NR, 1-Tx, 2-Tx, 4-Tx, and 8-Tx UL transmission may be supported. For a handheld UE, placing multiple transmit/receive antennas in a narrow physical space is challenging, and even when supported, such a configuration requires a high cost. Accordingly, a more practical antenna layout needs to be supported, and therefore, 3-port UL transmission needs to be considered. For 3-port UL transmission, codebook-based UL transmission or non-codebook-based UL transmission may be considered, and the present disclosure particularly proposes methods for codebook-based transmission.

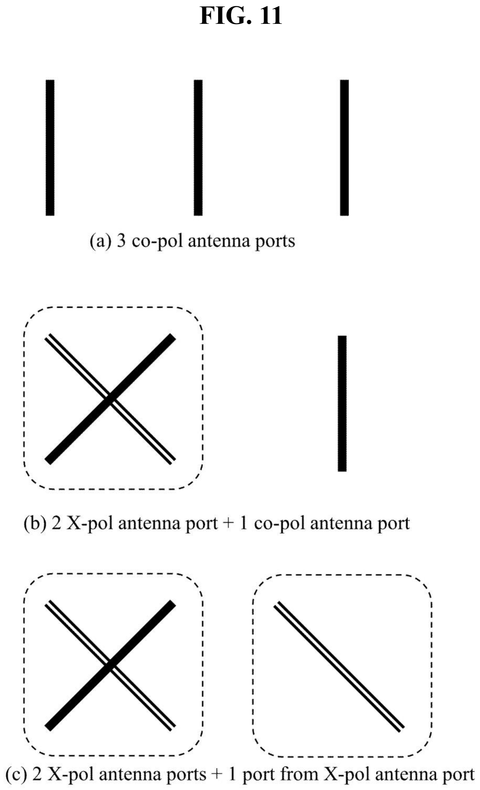

FIG. 11 illustrates an example of a 3-Tx UL antenna layout of a UE.

Referring to FIG. 11, 3-Tx UL antenna ports (hereinafter, ports) of the UE may be broadly classified into three types. One type is a case in which all three ports are composed of co-polarization (co-pol) antennas. Another type is a case in which two ports are cross-polarization (X-pol) antenna ports and a remaining one port is composed of a co-pol antenna. Finally, there is a case in which all three ports are composed of X-pol antennas, but two ports are composed of two full X-pol antennas and a remaining one port is composed of a "/" slant antenna or a "/" slant antenna port of X-pol.

In FIG. 11, an X-pol antenna may be composed of a single panel, and in this case, antenna coherency may be well maintained for two antenna ports. Here, antenna coherency (or UL coherent transmission) refers to whether a phase difference between antennas is maintained between SRS transmission and PUSCH transmission in UL transmission of the UE such that performance for a specific codebook may be properly reflected. The antenna coherency may be configured as UE capability.

**Proposal 1**

In 3-Tx UL transmission (for codebook-based UL), the following three levels of coherency are considered.

- Full coherency: a case in which all three ports are capable of coherent transmission.
- Partial coherency: a case in which only two ports are capable of coherent transmission, that is, in a 2+1 or 1+2 port configuration, two ports are capable of coherent transmission.
- Non-coherency: a case in which no port is capable of coherent transmission, that is, a case in which 1-port coherent transmission is possible.

In Proposal 1, for partial coherency, as shown in the second and third figures of FIG. 11, a 2-port group constituted by the same antenna group (e.g., a dotted-line group) may form a coherent group, and a remaining port may be non-coherent with the group.

**Proposal 2**

At least some of the following options may be used to construct a 3-Tx full-coherent codebook.

- Opt 1. A codebook based on a phase component that aligns coherency between a 2-port UL codebook and a remaining one port.
- Opt 2. A codebook based on a length-3 DFT vector.
- Opt 3. A codebook based on port-wise phase components.
- Opt 4. A codebook based on a predefined/configured length-3 basis.
- Opt 5. Construction of a 3-port codebook based on a legacy 4-port UL codebook.

Each codebook construction according to the options is described in detail.

(1) A codebook according to Opt 1 may be constructed as follows.

(i) Rank 1

For a rank-1 codebook, Equation 1 is used.
[Equation 1]

$$\mathbf{w} = \begin{bmatrix} \boldsymbol{b} \\ \rho \end{bmatrix} \ or \ \begin{bmatrix} 1 \\ \rho \boldsymbol{b} \end{bmatrix}$$

In Equation 1, b is a vector $b \in C^{2 \times 1}$ that is generated based on a 2-Tx UL codebook. For example, b may be generated as in Equation 2. For convenience of explanation, a codebook normalization factor is omitted in Equation 2.
[Equation 2]

$$\boldsymbol{b} = \left\{ \begin{bmatrix} 1 \\ 1 \end{bmatrix}, \begin{bmatrix} 1 \\ -1 \end{bmatrix}, \begin{bmatrix} 1 \\ j \end{bmatrix}, \begin{bmatrix} 1 \\ -j \end{bmatrix} \right\}$$

Here, $\rho$ is a factor for aligning a co-phase with b, and $\rho$ may be composed of an alphabet such as {1, -1} or {1, j, - 1, -j} through a predefined rule or based on a configuration by the BS, where the alphabet may correspond to BPSK, QPSK, 8PSK, or the like.

(ii) Rank 2

For a 2-Tx rank-2 UL codebook, b may be based on Equation 3. To maintain orthogonality, a codebook having the form shown in Equation 4 may be constructed.

[Equation 3]

$$b = \left\{ \begin{bmatrix} 1 & 1 \\ 1 & -1 \end{bmatrix}, \begin{bmatrix} 1 & 1 \\ j & -j \end{bmatrix} \right\}$$

[Equation 4]

$$w = \left\{ \begin{bmatrix} 1 & 1 \\ 1 & -1 \\ x & 0 \end{bmatrix}, \begin{bmatrix} 1 & 1 \\ j & -j \\ y & 0 \end{bmatrix} \right\}$$

In Equation 4, values x and y may be configured or determined as subsets of {1, j, -1, -j}.

(iii) Rank 3

For rank 3, rank-3 extension is not possible due to insufficient 2-Tx UL dimension. Therefore, a layer orthogonality procedure may be used to extend a given rank-1 codebook to rank 2 or rank 3 by adopting a layer-orthogonal projection method, for example, a Householder transform-based approach, a Givens rotation-based approach, or a Gram-Schmidt approach. In this case, the UE and the BS need to know the codebook construction method, and therefore, the layer orthogonality procedure needs to be defined in the standard.

(2) A codebook according to Opt 2 may be constructed as follows.

(i) Rank 1

In Option 2, a length-3 DFT codebook capable of maintaining orthogonality is used. A rank-1 codebook based thereon is shown in Equation 5.

[Equation 5]

$$w = \begin{bmatrix} 1 \\ 1 \\ 1 \end{bmatrix}, \begin{bmatrix} 1 \\ \exp\left(\dfrac{j2\pi}{3}\right) \\ \exp\left(\dfrac{j4\pi}{3}\right) \end{bmatrix}, \begin{bmatrix} 1 \\ \exp\left(\dfrac{j4\pi}{3}\right) \\ \exp\left(\dfrac{j8\pi}{3}\right) \end{bmatrix}$$

In Equation 5, an oversampling factor of 1 is assumed, and therefore the total codebook size is 3. To increase codebook performance, that is, to construct a larger-size codebook, it is also possible to increase the oversampling factor to 2. In this case, an additionally extended codebook is shown in Equation 6.

[Equation 6]

$$w = \begin{bmatrix} 1 \\ \exp\left(\dfrac{j2\pi}{6}\right) \\ \exp\left(\dfrac{j4\pi}{6}\right) \end{bmatrix}, \begin{bmatrix} 1 \\ \exp\left(\dfrac{j6\pi}{6}\right) \\ \exp\left(\dfrac{j12\pi}{6}\right) \end{bmatrix}, \begin{bmatrix} 1 \\ \exp\left(\dfrac{j10\pi}{6}\right) \\ \exp\left(\dfrac{j20\pi}{6}\right) \end{bmatrix}$$

The oversampling factor may be configured by the BS through RRC, or a predefined value may be used. When examining the above values, codebook elements mapped to each port are not expressed as integer values such as QPSK or BPSK but appear as real-valued numbers. This arises from the use of a length-3 DFT, and compared to codebook elements expressed as integer values, real-valued elements may require higher complexity to implement the corresponding codebook. Therefore, whether an oversampling factor is applied to the length-3 DFT-based codebook or which oversampling factor is used may be configured or indicated based on UE capability.

(ii) Rank 2

Compared to other options, a DFT-based codebook is advantageous because vectors are orthogonal to one another (that is, in the case of Equation 5, vectors in Equation 5 are mutually orthogonal, and in the case of Equation 6, vectors in Equation 6 are mutually orthogonal), and therefore a rank-2 codebook may be easily constructed. That is, for the rank-2 codebook, two vectors may be selected from among three candidate vectors of Equation 5, and the codebook may be constructed as shown in Equation 7.
[Equation 7]

$$\begin{bmatrix} 1 & 1 \\ 1 & \exp\left(\dfrac{j2\pi}{3}\right) \\ 1 & \exp\left(\dfrac{j4\pi}{3}\right) \end{bmatrix}, \begin{bmatrix} 1 & 1 \\ 1 & \exp\left(\dfrac{j4\pi}{3}\right) \\ 1 & \exp\left(\dfrac{j8\pi}{3}\right) \end{bmatrix}, \begin{bmatrix} 1 & 1 \\ \exp\left(\dfrac{j2\pi}{3}\right) & \exp\left(\dfrac{j4\pi}{3}\right) \\ \exp\left(\dfrac{j4\pi}{3}\right) & \exp\left(\dfrac{j8\pi}{3}\right) \end{bmatrix}$$

The codebook of Equation 6 may also be extended or applied to rank 2 in a manner similar to Equation 7.

(iii) Rank 3

For rank 3, it may be limited to a case in which all three vectors are used as shown in Equation 8 or Equation 9.
[Equation 8]

$$\begin{bmatrix} 1 & 1 & 1 \\ 1 & \exp\left(\dfrac{j2\pi}{3}\right) & \exp\left(\dfrac{j4\pi}{3}\right) \\ 1 & \exp\left(\dfrac{j4\pi}{3}\right) & \exp\left(\dfrac{j8\pi}{3}\right) \end{bmatrix}$$

Equation 9]

$$\begin{bmatrix} 1 & 1 & 1 \\ \exp\left(\dfrac{j2\pi}{6}\right) & \exp\left(\dfrac{j6\pi}{6}\right) & \exp\left(\dfrac{j10\pi}{6}\right) \\ \exp\left(\dfrac{j4\pi}{6}\right) & \exp\left(\dfrac{j12\pi}{6}\right) & \exp\left(\dfrac{j20\pi}{6}\right) \end{bmatrix}$$

Since granularity for lower ranks is more important in terms of performance, a higher oversampling factor may be used to construct a codebook only for a specific rank or lower. For example, an oversampling factor of 2 may be applied only to rank 1, and an oversampling factor of 1 may be applied to rank 2 and rank 3.

(3) A codebook according to Opt 3 may be constructed as follows.

The codebook of Option 3 may be constructed based on $[1, x, y]^T$, where x and y may be determined through a predefined rule or based on a configuration by the BS. Depending on an alphabet size of values x and y, the codebook may become a special case of Option 1. For example, when x and y are {1, j, -1, -j}, the codebook may become a special case of Option 1.

(4) A codebook according to Opt 4 may be constructed as follows.

In Option 4, a predefined orthogonal set (not based on a DFT) may be used.
For example, a codebook based on the bases of Equation 10 may be considered. In the codebook, the normalization factor becomes 2. Such bases may be predefined or may be configured by the BS. Based on these orthogonal bases, rank 1, rank 2, and rank 3 may be constructed according to the method described in Option 2.

[Equation 10]

$$\begin{bmatrix} 1 \\ 0 \\ -1 \end{bmatrix}, \begin{bmatrix} 1 \\ \sqrt{2} \\ 1 \end{bmatrix}, \begin{bmatrix} 1 \\ -\sqrt{2} \\ 1 \end{bmatrix}$$

(5) A codebook according to Opt 5 may be constructed as follows.

In Option 5, a legacy 4-Tx codebook is used.

[Table 7]

| TPMI index | W (ordered from left to right in increasing order of TPMI index) | | | | | | | |
|---|---|---|---|---|---|---|---|---|
| 0 - 7 | $\dfrac{1}{2}\begin{bmatrix}1\\0\\0\\0\end{bmatrix}$ | $\dfrac{1}{2}\begin{bmatrix}0\\1\\0\\0\end{bmatrix}$ | $\dfrac{1}{2}\begin{bmatrix}0\\0\\1\\0\end{bmatrix}$ | $\dfrac{1}{2}\begin{bmatrix}0\\0\\0\\1\end{bmatrix}$ | $\dfrac{1}{2}\begin{bmatrix}1\\0\\1\\0\end{bmatrix}$ | $\dfrac{1}{2}\begin{bmatrix}1\\0\\-1\\0\end{bmatrix}$ | $\dfrac{1}{2}\begin{bmatrix}1\\0\\j\\0\end{bmatrix}$ | $\dfrac{1}{2}\begin{bmatrix}1\\0\\-j\\0\end{bmatrix}$ |
| 8 - 15 | $\dfrac{1}{2}\begin{bmatrix}0\\1\\0\\1\end{bmatrix}$ | $\dfrac{1}{2}\begin{bmatrix}0\\1\\0\\-1\end{bmatrix}$ | $\dfrac{1}{2}\begin{bmatrix}0\\1\\0\\j\end{bmatrix}$ | $\dfrac{1}{2}\begin{bmatrix}0\\1\\0\\-j\end{bmatrix}$ | $\dfrac{1}{2}\begin{bmatrix}1\\1\\1\\1\end{bmatrix}$ | $\dfrac{1}{2}\begin{bmatrix}1\\1\\j\\j\end{bmatrix}$ | $\dfrac{1}{2}\begin{bmatrix}1\\1\\-1\\-1\end{bmatrix}$ | $\dfrac{1}{2}\begin{bmatrix}1\\1\\-j\\-j\end{bmatrix}$ |

(continued)

| TPMI index | *W* (ordered from left to right in increasing order of TPMI index) | | | | | | | |
|---|---|---|---|---|---|---|---|---|
| 16 - 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

Table 7 shows a legacy 4-Tx UL codebook, and TPMI indices 12 to 27 correspond to full-coherent codebooks. When a codebook based on the 4-Tx configuration is used, a UL precoder is configured by using a codebook that uses only three ports among given four ports. In this case, how the three ports among the four ports are mapped and used may be predefined or configured in advance by the BS. For example, ports 1, 2, and 3 may be used. For instance, when the BS indicates TPMI index 27, the vector becomes $[1, -j, -j, -1]^T$ for the 4-Tx case. For instance, when the BS indicates TPMI index 27, the corresponding vector becomes $[1, -j, -j, -1]^T$ for the 4-Tx case, but the UE may interpret the vector as a 3-Tx codebook, that is, $[1, -j, -j]^T$.

The advantage of Option 5 is that an existing codebook design may be reused without designing a separate codebook. However, extension to rank 2 or rank 3 is difficult. This is because orthogonality that is maintained in a length-4 configuration is not easily maintained when the length is arbitrarily reduced to length 3. Therefore, when this option is used, operation, configuration, and support may be limited to rank 1.

As described in Proposal 2 above, for a rank-1 codebook, Option 1, Option 3, or Option 5 may be used because the options allow use of an alphabet granularity of an existing codebook such as QPSK or BPSK. However, since these options are not easily extendable to rank 2 or rank 3, when these options are considered for a 3-Tx UL codebook, a full-coherent case is supported only for rank 1. For rank 2 and/or rank 3, a codebook may be constructed based on partial-coherent and/or non-coherent codebook construction method described below.

**Proposal 3**

For a 3-Tx partial-coherent codebook, the codebook construction shown in Equation 11 may be considered.

[Equation 11]

$$\text{Rank 1: } \begin{bmatrix}1\\x\\0\end{bmatrix} \; and/or \; \begin{bmatrix}0\\0\\1\end{bmatrix}$$

$$\text{Rank 2: } \begin{bmatrix}1&1\\x&y\\0&0\end{bmatrix} \; and/or \; \begin{bmatrix}1&0\\x&0\\0&1\end{bmatrix}$$

$$\text{Rank 3: } \begin{bmatrix}1&1&0\\x&y&0\\0&0&1\end{bmatrix}$$

In the partial-coherent codebook of Proposal 3, 2+1 2-port partial coherency and 1+2 2-port partial coherency may be considered as shown in FIG. 11. Equation 11 shows a 2+1 example for convenience of explanation, and an example of 1+2 is shown in Equation 12.

[Equation 12]

$$\text{Rank 1: } \begin{bmatrix} 1 \\ 0 \\ 0 \end{bmatrix} \ and/or \ \begin{bmatrix} 0 \\ 1 \\ x \end{bmatrix}$$

$$\text{Rank 2: } \begin{bmatrix} 1 & 0 \\ 0 & 1 \\ 0 & x \end{bmatrix} \ and/or \ \begin{bmatrix} 0 & 0 \\ 1 & 1 \\ x & y \end{bmatrix}$$

$$\text{Rank 3: } \begin{bmatrix} 1 & 0 & 0 \\ 0 & 1 & 1 \\ 0 & x & y \end{bmatrix}$$

The above examples correspond to examples of row permutation, and a mapping order of 2+1 and 1+2 ports may be predefined to construct a codebook, or one of the two codebooks may be configured or indicated to the UE based on reporting of UE capability.

In Proposal 3, values x and/or y may be configured in a form similar to Proposal 2, for example, x, y = {1, j, -1, -j}, and an alphabet size may be configured or indicated by the BS for codebook flexibility. In addition, for components $[1, x]^T$, $[1, y]^T$, and/or $[(1, x)^T (1, y)^T]$, a legacy 2-Tx UL codebook may be used for Option 1 of Proposal 2.

## Proposal 4

For a 3-Tx non-coherent codebook, the codebook construction as shown in Equation 13 may be considered.

[Equation 13]

$$\text{Rank 1: } \begin{bmatrix} 1 \\ 0 \\ 0 \end{bmatrix}, \begin{bmatrix} 0 \\ 1 \\ 0 \end{bmatrix}, \begin{bmatrix} 0 \\ 0 \\ 1 \end{bmatrix}$$

$$\text{Rank 2: } \begin{bmatrix} 1 & 0 \\ 0 & 1 \\ 0 & 0 \end{bmatrix}, \begin{bmatrix} 1 & 0 \\ 0 & 0 \\ 0 & 1 \end{bmatrix}, \begin{bmatrix} 0 & 0 \\ 1 & 0 \\ 0 & 1 \end{bmatrix}$$

$$\text{Rank 3: } \begin{bmatrix} 1 & 0 & 0 \\ 0 & 1 & 0 \\ 0 & 0 & 1 \end{bmatrix}$$

Proposal 4 is a non-coherent codebook construction method, and a port-selection codebook may be constructed as in a legacy configuration method.

For a rank-1 codebook, a specific codebook/codebook subset may be configured by the BS based on coherent capability such as full, partial, and/or non-coherent as described above. However, as described above, specific full-coherent codebooks (e.g., Option 1, Option 3, Option 4, or Option 5 of Proposal 2) are not easily extendable to rank 2 and rank 3. In this case, even when the UE reports full coherency through capability reporting and the BS configures the corresponding codebook/codebook subset, rank-2 and rank-3 codebooks may be constructed by using all or part of the methods of Option 2 of Proposal 2 or Proposal 3/4, or by using the methods independently. That is, the full-coherent characteristic corresponds to a codebook/codebook subset that may appear only for a specific rank.

## Proposal 5

To support 3-Tx codebook-based UL, the following SRS configuration methods may be considered.

- Option 1: For UL transmission based on a 3-Tx codebook, a 3-port SRS resource may be determined and transmitted. For such SRS transmission, a 4-port SRS resource mapping/transmission method may be reused. For example, even when the UE is scheduled with a 4-port SRS resource, the UE may interpret and operate such that the corresponding SRS resource is used for 3-Tx codebook-based UL transmission by using an SRI field or a new field/indicator in DCI.

- Option 2: By using a single or multiple SRI fields or a new field/indicator in DCI, a plurality of SRS resources (e.g., 2+1 or 1+1+1) may be indicated, and the number of ports obtained by aggregating the SRS resources (3 ports in the above example) may be used for PUSCH transmission.

As an example of Proposal 5, existing legacy SRS resources may be reused without creating 3-port SRS resources. In Option 1, a 4-port resource may be used as it is, and for a 3-port-capable UE, only a subset of the resource may be used such that three ports are configured during 3-port operation. For example, (i) in a case in which four ports are configured/multiplexed only by a CS value shift, the UE may perform SRS sequence generation for respective three ports by using only three CS values among 4 CS values, and/or (ii) in a case in which four ports are configured/multiplexed by a combination of a CS value and a comb offset, the UE may configure two combs through two comb offsets, but for one of the two combs, only a single (identical) CS value may be used such that SRS sequence generation/mapping for respective three ports may be performed. That is, one comb may have one port configured through one CS value, and the other comb may have two ports configured/multiplexed through two CS values. Therefore, a total of three ports may be configured/multiplexed for two combs.

As described above, although SRS sequence generation and resource mapping defined for four SRS ports are used, 3-port SRS transmission may be performed by not performing SRS sequence generation and resource mapping for one of the four SRS ports. Since one of the four ports is unused and muted, there may be a disadvantage in that some resources are unused. However, an advantage may be achieved in that implementation is simplified by reusing an existing 4-port method. A port for which SRS sequence generation and resource mapping are omitted may be the last port among the four SRS ports.

In Option 2, an advantage may be achieved in that resource flexibility is improved. In particular, to prevent performance degradation that may occur when aggregated ports overlap in the frequency domain or are excessively separated in the time domain, specific SRS resources to be aggregated may be configured not to overlap, or a minimum or maximum gap (e.g., X symbols or slots) between the aggregated SRS resources may be defined. In particular, in Option 2, a plurality of SRI fields introduced for MTRP UL transmission may be reused such that the SRI fields are used to indicate respective SRS resources to be aggregated.

Proposals 1/2/3/4/5 described above may be used independently or may be configured in combination.

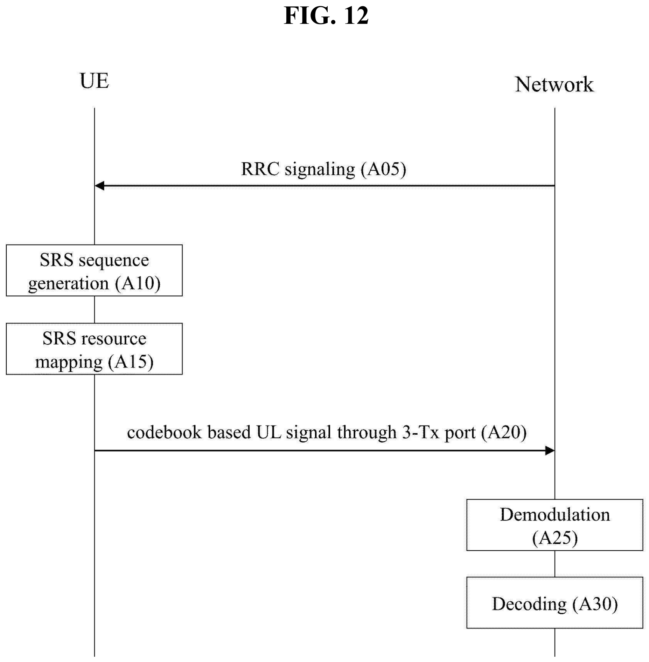

FIG. 12 illustrates an example implementation of operations of a network and a UE according to an embodiment.

Referring to FIG. 12, the UE may receive RRC signaling from the network at least once (A05). The RRC signaling may include an SRS configuration. The SRS configuration may be configured, for example, according to the SRS-Config IE described in Table 6. In this case, the number of SRS antenna ports (nrofSRS-Ports) in an SRS-Resource configuration may be set to 3.

The UE may generate SRS sequences based on the SRS configuration (A10). Based on the number of SRS antenna ports being three, the UE may perform SRS sequence generation only for a total of three SRS antenna ports according to an SRS sequence generation method defined for four SRS antenna ports. Table 8 is an excerpt of an SRS sequence generation method defined in the existing NR standard, TS 38.211, which supports up to four SRS antenna ports.

[Table 8]

---

6.4.1.4.2 Sequence generation

The sounding reference signal sequence for an SRS resource shall be generated according to

$$r^{(p_i)}(n, l') = r_{u,v}^{(\alpha_i, \delta)}(n)$$

$$0 \le n \le M_{\text{sc},b}^{\text{SRS}} - 1$$

$$l' \in \left\{ 0, 1, ..., N_{\text{symb}}^{\text{SRS}} - 1 \right\}$$

where $M_{\text{sc},b}^{\text{SRS}}$ is given by clause 6.4.1.4.3, $r_{u,v}^{(\alpha, \delta)}(n)$ is given by clause 5.2.2 with $\delta = \log_2(K_{\text{TC}})$ and the transmission comb number $K_{\text{TC}} \in \{2,4,8\}$ is contained in the higher-layer parameter *transmissionComb.* The cyclic shift $\alpha_i$ for antenna port $p_i$ is given as

$$\alpha_i = 2\pi \frac{n_{\text{SRS}}^{\text{cs},i}}{n_{\text{SRS}}^{\text{cs,max}}}$$

---

(continued)

$$n_{\text{SRS}}^{\text{cs},i} = \begin{cases} \left( n_{\text{SRS}}^{\text{cs}} + \frac{n_{\text{SRS}}^{\text{cs,max}} \lfloor (p_i - 1000)/2 \rfloor}{N_{\text{ap}}^{\text{SRS}}/2} \right) \bmod n_{\text{SRS}}^{\text{cs,max}} & \text{if } N_{\text{ap}}^{\text{SRS}} = 4 \text{ and } n_{\text{SRS}}^{\text{cs,max}} = 6 \\ \left( n_{\text{SRS}}^{\text{cs}} + \frac{n_{\text{SRS}}^{\text{cs,max}} (p_i - 1000)}{N_{\text{ap}}^{\text{SRS}}} \right) \bmod n_{\text{SRS}}^{\text{cs,max}} & \text{otherwise} \end{cases},$$

where $n_{\text{SRS}}^{\text{cs}} \in \left\{ 0, 1, \dots, n_{\text{SRS}}^{\text{cs,max}} - 1 \right\}$ is contained in the higher layer parameter *transmissionComb.* The maximum number of cyclic shifts $n_{\text{SRS}}^{\text{cs,max}}$ are given by Table 6.4.1.4.2-1.

For SRS transmission through the three antenna ports, the UE may follow the SRS sequence generation method defined in Table 8 under the assumption that four antenna ports are used, but SRS sequence generation for a fourth (last) SRS antenna port may be omitted.

The UE may perform SRS resource mapping based on the SRS configuration (A15). The UE may map the SRS sequences generated in step A10 to the three antenna ports. Based on the number of SRS antenna ports being three, the UE may perform the SRS resource mapping only for the three SRS antenna ports according to an SRS resource mapping scheme defined for four SRS antenna ports. Table 9 is an excerpt of an SRS resource mapping scheme defined in the existing NR standard, TS 38.211, which supports up to four SRS antenna ports.

[Table 9]

6.4.1.4.3 Mapping to physical resources

When SRS is transmitted on a given SRS resource, the sequence $r^{(p_i)}(n, l')$ for each OFDM symbol $l'$ and for each of the antenna ports of the SRS resource shall be multiplied with the amplitude scaling factor $\beta_{\text{SRS}}$ in order to conform to the transmit power specified in [5, 38.213] and mapped in sequence starting with $r^{(p_i)}(0, l')$ to resource elements $(k, l)$ in a slot for each of the antenna ports $p_i$ according to

$$a_{K_{\text{TC}}k'+k_0^{(p_i)}, l'+l_0}^{(p_i)} = \begin{cases} \frac{1}{\sqrt{N_{\text{ap}}}} \beta_{\text{SRS}} r^{(p_i)}(k', l') & k' = 0, 1, \dots, M_{\text{sc},b}^{\text{SRS}} - 1 \quad l' = 0, 1, \dots, N_{\text{symb}}^{\text{SRS}} - 1 \\ 0 & \text{otherwise} \end{cases}$$

The length of the sounding reference signal sequence is given by

$$M_{\text{sc},b}^{\text{SRS}} = m_{\text{SRS},b} N_{\text{sc}}^{\text{RB}} / (K_{\text{TC}} P_{\text{F}})$$

where $m_{\text{SRS},b}$ is given by a selected row of Table 6.4.1.4.3-1 with $b = B_{\text{SRS}}$ where $B_{\text{SRS}} \in \{0,1,2,3\}$ is given by the field *b-SRS* contained in the higher-layer parameter *freqH opping* if configured, otherwise $B_{\text{SRS}} = 0$. The row of the table is selected according t o the index $c_{\text{SRS}} \in \{0,1,\dots,63\}$ given by the field *c-SRS* contained in the higher-layer para meter *freqHopping*. The quantity $P_{\text{F}} \in \{2, 4\}$ is given by the higher-layer parameter *Fre qScalingFactor* if configured, otherwise $P_{\text{F}} = 1$. When *FreqScalingFactor* is configured, the UE expects the length of the SRS sequence to be a multiple of 6.

The frequency-domain starting position $\hat{k}_0^{(p_i)}$ is defined by

$$k_0^{(p_i)} = \bar{k}_0^{(p_i)} + n_{\text{offset}}^{\text{FH}} + n_{\text{offset}}^{\text{RPFS}}$$

where

$$\bar{k}_0^{(p_i)} = n_{\text{shift}} N_{\text{sc}}^{\text{RB}} + \left( k_{\text{TC}}^{(p_i)} + k_{\text{offset}}^{l'} \right) \bmod K_{\text{TC}}$$

(continued)

$$k_{\text{TC}}^{(p_i)} =$$
$$\begin{cases} \left(\bar{k}_{\text{TC}} + K_{\text{TC}}/2\right) \bmod K_{\text{TC}} & \text{if } N_{\text{ap}}^{\text{SRS}} = 4,\, p_i \in \{1001, 1003\},\ \text{and } n_{\text{SRS}}^{\text{cs,max}} = 6 \\ \left(\bar{k}_{\text{TC}} + K_{\text{TC}}/2\right) \bmod K_{\text{TC}} & \text{if } N_{\text{ap}}^{\text{SRS}} = 4,\, p_i \in \{1001, 1003\},\ \text{and } n_{\text{SRS}}^{\text{cs}} \in \left\{ n_{\text{SRS}}^{\text{cs,max}}/2, \ldots, n_{\text{SRS}}^{\text{cs,max}} - 1 \right\} \\ \bar{k}_{\text{TC}} & \text{otherwise} \end{cases}$$

$$n_{\text{offset}}^{\text{FH}} = \sum_{b=0}^{B_{\text{SRS}}} m_{\text{SRS},b} N_{\text{sc}}^{\text{RB}} n_b$$

$$n_{\text{offset}}^{\text{RPFS}} = N_{\text{sc}}^{\text{RB}} m_{\text{SRS},B_{\text{SRS}}} \left( \left( k_{\text{F}} + k_{\text{hop}} \right) \bmod P_{\text{F}} \right) / P_{\text{F}}$$

and
- $k_F \in \{0, 1, \ldots, P_F - 1\}$ is given by the higher-layer parameter *StartRBIndex* if configured, otherwise $k_F = 0$;
- $k_{\text{hop}}$ is given by Table 6.4.1.4.3-3 with

$$\bar{k}_{\text{hop}} = \frac{n_{\text{SRS}}}{\prod_{b'=b_{\text{hop}}}^{B_{\text{SRS}}} N_{b'}} \bmod P_{\text{F}}$$

$$N_{b_{\text{hop}}} = \text{'}$$

if the higher-layer parameter *EnableStartRBHopping* is configured, otherwise $k_{\text{hop}} = 0$.

For SRS transmission through the three antenna ports, the UE may follow the SRS resource mapping scheme defined in Table 9 under the assumption that four antenna ports are used, but SRS resource mapping for a fourth (last) SRS antenna port may be omitted.

The UE may perform codebook-based UL signal transmission through the three antenna ports (A20). The UL signal may include at least one of an SRS and a PUSCH generated and mapped as described above. A codebook used for precoding of the PUSCH signal may be a codebook constructed based on Equation 13.

The network may perform demodulation for the UL signal (A25) and may perform decoding (A30).

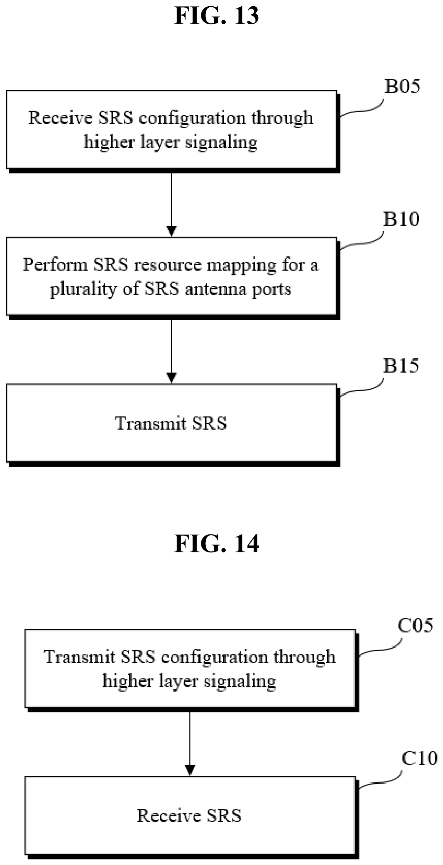

FIG. 13 illustrates an example implementation of operations of a UE in a wireless communication system according to an embodiment.

Referring to FIG. 13, the UE may receive an SRS configuration through higher-layer signaling (B05).

The UE may perform SRS resource mapping for a plurality of SRS antenna ports based on the SRS configuration (B10).

The UE may transmit an SRS through the plurality of SRS antenna ports based on the SRS resource mapping (B15).

Based on the number of the plurality of SRS antenna ports being three, the UE may perform the SRS resource mapping only for the three SRS antenna ports according to an SRS resource mapping scheme defined for four SRS antenna ports.

The total three SRS antenna ports may be multiplexed based on three cyclic-shift values. The three cyclic-shift values may be a subset of four cyclic-shift values defined for the four SRS antenna ports.

The total three SRS antenna ports may be multiplexed based on a total of two cyclic-shift values and a total of two comb-offset values. Among the total three SRS antenna ports, (i) a first cyclic-shift value and a first comb-offset value may be applied to a first SRS antenna port, (ii) a second cyclic-shift value and the first comb-offset value may be applied to a second SRS antenna port, and (iii) one of the first cyclic-shift value and the second cyclic-shift value and a second comb-offset value may be applied to a third SRS antenna port.

The UE may perform SRS sequence generation for a plurality of SRS antenna ports based on the SRS configuration. Based on the number of the plurality of SRS antenna ports being three, the UE may perform the SRS sequence generation only for the three SRS antenna ports according to an SRS sequence generation scheme defined for four SRS antenna ports.

A total of three SRS sequences may be generated for the total three SRS antenna ports based on at least two cyclic-shift values.

The SRS transmission may be performed excluding a last SRS antenna port among the four SRS antenna ports.

The SRS transmission may be associated with codebook-based UL transmission. Specifically, the SRS transmission may be associated with UL transmission based on a non-coherent codebook. The non-coherent codebook may include precoding matrices constructed for each rank based on Equation 13.

FIG. 14 illustrates an example implementation of operations of a BS in a wireless communication system according to an embodiment.

Referring to FIG. 14, the BS may transmit an SRS configuration to a UE through higher-layer signaling (C05).

The BS may receive an SRS through a plurality of SRS antenna ports of the UE based on the SRS configuration (C10).

Based on the number of the plurality of SRS antenna ports being three, the BS may determine or identify SRS resources mapped for the three SRS antenna ports according to an SRS resource mapping scheme defined for four SRS antenna ports.

The total three SRS antenna ports may be multiplexed based on three cyclic-shift values. The three cyclic-shift values may be a subset of four cyclic-shift values defined for the four SRS antenna ports.

The total three SRS antenna ports may be multiplexed based on a total of two cyclic-shift values and a total of two comb-offset values. Among the total three SRS antenna ports, (i) a first cyclic-shift value and a first comb-offset value may be applied to a first SRS antenna port, (ii) a second cyclic-shift value and the first comb-offset value may be applied to a second SRS antenna port, and (iii) one of the first cyclic-shift value and the second cyclic-shift value and a second comb-offset value may be applied to a third SRS antenna port.

The BS may acquire SRS sequences for a plurality of SRS antenna ports based on the SRS configuration. Based on the number of the plurality of SRS antenna ports being three, the BS may acquire SRS sequences generated for the three SRS antenna ports according to an SRS sequence generation scheme defined for four SRS antenna ports.

A total of three SRS sequences may be acquired for the total three SRS antenna ports based on at least two cyclic-shift values.

The SRS reception may be performed excluding a last SRS antenna port among the four SRS antenna ports.

The SRS reception may be associated with codebook-based UL reception. Specifically, the SRS reception may be associated with UL reception based on a non-coherent codebook. The non-coherent codebook may include precoding matrices constructed for each rank based on Equation 13.

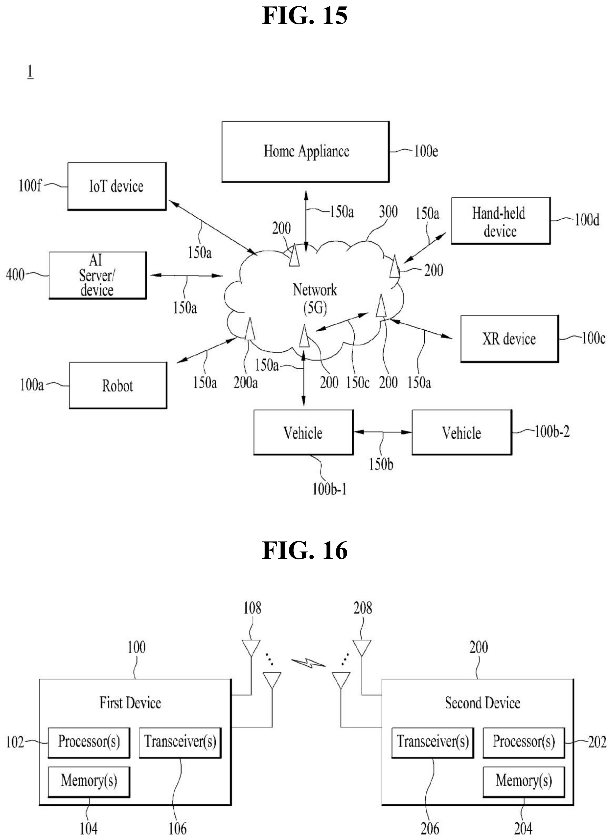

FIG. 15 illustrates a communication system 1 applied to the disclosure.

Referring to FIG. 15, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

FIG. 16 illustrates wireless devices applicable to the disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

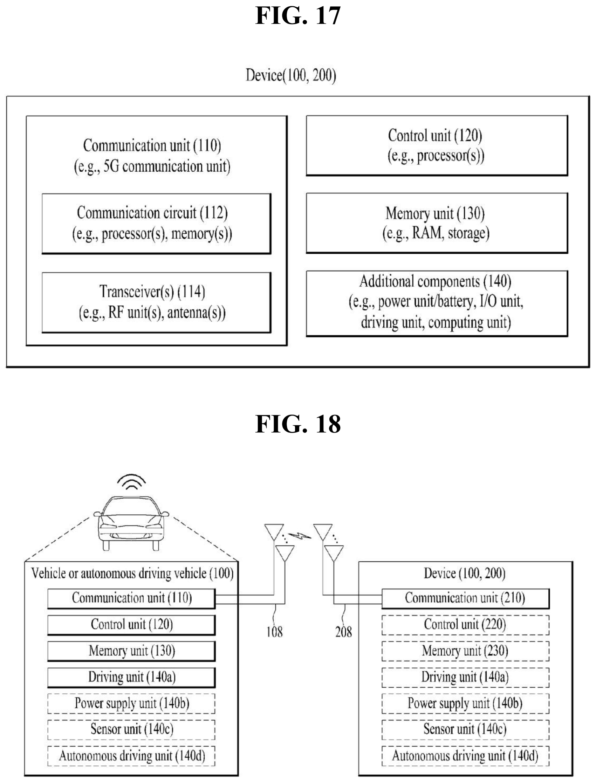

FIG. 17 illustrates another example of a wireless device applied to the disclosure. The wireless device may be implemented in various forms according to a use-case/service (refer to FIG. 15).

Referring to FIG. 17, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 17, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 18 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 18, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 17, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the disclosure in prescribed forms. In addition, the respective elements or features may be considered as selective unless they are explicitly mentioned. Each of the elements or features can be implemented in a form failing to be combined with other elements or features. Moreover, it is able to implement an embodiment of the disclosure by combining elements and/or features together in part. A sequence of operations explained for each embodiment of the disclosure can be modified. Some configurations or features of one embodiment can be included in another embodiment or can be substituted for corresponding configurations or features of another embodiment. In addition, it is apparently understandable that an embodiment is configured by combining claims failing to have relation of explicit citation in the appended claims together or can be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The disclosure is applicable to UEs, BSs, or other apparatuses in a wireless mobile communication system.

**Claims**

1. A method for transmitting a signal by a user equipment (UE) in a wireless communication system, the method comprising:

    receiving a sounding reference signal (SRS) configuration through higher-layer signaling;
    performing SRS resource mapping for a plurality of SRS antenna ports based on the SRS configuration; and
    transmitting an SRS through the plurality of SRS antenna ports based on the SRS resource mapping,
    wherein, based on a number of the plurality of SRS antenna ports being three, the UE performs the SRS resource mapping only for the three SRS antenna ports based on an SRS resource mapping scheme defined for four SRS antenna ports.

2. The method of claim 1, wherein the three SRS antenna ports are multiplexed based on three cyclic-shift values.

3. The method of claim 2, wherein the three cyclic-shift values are a subset of four cyclic-shift values defined for the four SRS antenna ports.

4. The method of claim 1, wherein the three SRS antenna ports are multiplexed based on two cyclic-shift values and two comb-offset values.

5. The method of claim 4, wherein, among the three SRS antenna ports,

    (i) a first cyclic-shift value and a first comb-offset value are applied to a first SRS antenna port,
    (ii) a second cyclic-shift value and the first comb-offset value are applied to a second SRS antenna port, and
    (iii) one of the first cyclic-shift value and the second cyclic-shift value and a second comb-offset value are applied to a third SRS antenna port.

6. The method of claim 1, further comprising performing SRS sequence generation for the plurality of SRS antenna ports based on the SRS configuration,
   wherein, based on the number of the plurality of SRS antenna ports being three, the UE performs the SRS sequence generation only for the three SRS antenna ports based on an SRS sequence generation scheme defined for four SRS antenna ports.

7. The method of claim 6, wherein three SRS sequences are generated for the three SRS antenna ports based on at least two cyclic-shift values.

8. The method of claim 1, wherein the SRS transmission is performed excluding a last SRS antenna port among the four SRS antenna ports.

9. The method of claim 1, wherein the SRS transmission is associated with uplink transmission based on a non-coherent codebook, and
   wherein the non-coherent codebook includes precoding matrices constructed for each rank based on Table A.

[Table A]

| Rank 1 | $\begin{bmatrix} 1 \\ 0 \\ 0 \end{bmatrix}$ | $\begin{bmatrix} 0 \\ 1 \\ 0 \end{bmatrix}$ | $\begin{bmatrix} 0 \\ 0 \\ 1 \end{bmatrix}$ |
|---|---|---|---|
| Rank 2 | $\begin{bmatrix} 1 & 0 \\ 0 & 1 \\ 0 & 0 \end{bmatrix}$ | $\begin{bmatrix} 1 & 0 \\ 0 & 0 \\ 0 & 1 \end{bmatrix}$ | $\begin{bmatrix} 0 & 0 \\ 1 & 0 \\ 0 & 1 \end{bmatrix}$ |

(continued)

| Rank 3 | | $\begin{bmatrix} 1 & 0 & 0 \\ 0 & 1 & 0 \\ 0 & 0 & 1 \end{bmatrix}$ | |
|---|---|---|---|

10. A computer-readable recording medium having recorded thereon a program for executing the method of claim 1.

11. An apparatus for wireless communication, the apparatus comprising:

a memory configured to store instructions; and
a processor configured to perform operations by executing the instructions,
wherein the operations performed by the processor comprise:

receiving a sounding reference signal (SRS) configuration through higher-layer signaling;
performing SRS resource mapping for a plurality of SRS antenna ports based on the SRS configuration; and
transmitting an SRS through the plurality of SRS antenna ports based on the SRS resource mapping, and
wherein, based on a number of the plurality of SRS antenna ports being three, the SRS resource mapping is performed only for the three SRS antenna ports based on an SRS resource mapping scheme defined for four SRS antenna ports.

12. The apparatus of claim 11, further comprising a transceiver,
wherein the apparatus is a user equipment (UE) operating in a wireless communication system.

13. The apparatus of claim 11, wherein the apparatus is a processing device configured to control a user equipment (UE) operating in a wireless communication system.

14. A method for receiving a signal by a base station (BS) in a wireless communication system, the method comprising:

transmitting a sounding reference signal (SRS) configuration to a user equipment (UE) through higher-layer signaling; and
receiving an SRS through a plurality of SRS antenna ports of the UE based on the SRS configuration,
wherein, based on a number of the plurality of SRS antenna ports being three, the BS determines SRS resources mapped for the three SRS antenna ports based on an SRS resource mapping scheme defined for four SRS antenna ports.

15. A base station (BS) for wireless communication, the BS comprising:

a memory configured to store instructions; and
a processor configured to perform operations by executing the instructions,
wherein the operations performed by the processor comprise:

transmitting a sounding reference signal (SRS) configuration to a user equipment (UE) through higher-layer signaling; and
receiving an SRS through a plurality of SRS antenna ports of the UE based on the SRS configuration, and
wherein, based on a number of the plurality of SRS antenna ports being three, the BS determines SRS resources mapped for the three SRS antenna ports based on an SRS resource mapping scheme defined for four SRS antenna ports.

EP 4 746 305 A1

# FIG. 1

# FIG. 2

# FIG. 3

# FIG. 4

# FIG. 5

# FIG. 6

UL grant-to-PUSCH offset (K2)

# FIG. 7

Configuration Information related to CSI (710)

RS(e.g., CSI-RS) (720)

Calculate CSI (730)

Report CSI (740)

# FIG. 8

TRP 1

TRP 2

Layer Group #1
for CW#1

Layer Group #1
for CW#2

UE 1

**(a)**

TRP 1

TRP 2

Layer Group #1
for CW#1

Layer Group #2
for CW#2

UE 1

**(b)**

# FIG. 9

(a) Level 1 Partial Conherent (Ng=2)

(b) Level 2 Partial Conherent (Ng=4)

# FIG. 10

Level 1 Partial Coherent (Ng=2)

# FIG. 11

(a) 3 co-pol antenna ports

(b) 2 X-pol antenna port + 1 co-pol antenna port

(c) 2 X-pol antenna ports + 1 port from X-pol antenna port

# FIG. 12

UE                                                        Network

RRC signaling (A05)

| SRS sequence generation (A10) |

| SRS resource mapping (A15) |

codebook based UL signal through 3-Tx port (A20)

| Demodulation (A25) |

| Decoding (A30) |

# FIG. 13

Receive SRS configuration through higher layer signaling — B05

Perform SRS resource mapping for a plurality of SRS antenna ports — B10

Transmit SRS — B15

# FIG. 14

Transmit SRS configuration through higher layer signaling — C05

Receive SRS — C10

# FIG. 15

1

# FIG. 16

# FIG. 17

Device(100, 200)

| | |
|---|---|
| Communication unit (110) (e.g., 5G communication unit) | Control unit (120) (e.g., processor(s)) |
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 18

Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)

108  208

Device (100, 200)
Communication unit (210)
Control unit (220)
Memory unit (230)
Driving unit (140a)
Power supply unit (140b)
Sensor unit (140c)
Autonomous driving unit (140d)

## INTERNATIONAL SEARCH REPORT

| International application No. |
|---|
| **PCT/KR2024/009196** |

| A. | CLASSIFICATION OF SUBJECT MATTER |
|---|---|

**H04B 7/0456**(2017.01)i; **H04B 7/0404**(2017.01)i; **H04W 72/1268**(2023.01)i; **H04W 72/231**(2023.01)i;
**H04W 72/232**(2023.01)i; **H04W 8/24**(2009.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04B 7/0456(2017.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SRS(sounding reference signal), 설정(configuration), 복수(plurality), 안테나 포트 (antenna port), 자원(resource), 맵핑(mapping)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CATT. On SRS enhancement for CJT and 8Tx operation. R1-2304709, 3GPP TSG RAN WG1 #113. Incheon, Korea. 15 May 2023.<br>See section 2.2.1. | 1-15 |
| A | CMCC. Discussion on SRS enhancement targeting TDD CJT and 8 TX operation. R1-2305081, 3GPP TSG RAN WG1 #113. Incheon, Korea. 15 May 2023.<br>See sections 1-3.3. | 1-15 |
| A | CMCC. Discussion on SRS enhancement targeting TDD CJT and 8 TX operation. R1-2303220, 3GPP TSG RAN WG1 #112bis-e. 07 April 2023.<br>See sections 1-3.2. | 1-15 |
| A | HUAWEI et al. SRS enhancement for TDD CJT and UL 8Tx operation in Rel-18. R1-2300097, 3GPP TSG RAN WG1 Meeting #112. Athens, Greece. 17 February 2023.<br>See sections 1-3. | 1-15 |
| A | KR 10-2023-0025428 A (LG ELECTRONICS INC.) 21 February 2023 (2023-02-21)<br>See paragraphs [0095]-[0593]; and figures 1-19. | 1-15 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 October 2024** | **15 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/009196**

| Patent document cited in search report | | | Publication date (day/month/year) | Patent family member(s) | | | Publication date (day/month/year) |
|---|---|---|---|---|---|---|---|
| KR | 10-2023-0025428 | A | 21 February 2023 | US | 2023-0275730 | A1 | 31 August 2023 |
| | | | | WO | 2022-075726 | A1 | 14 April 2022 |

Form PCT/ISA/210 (patent family annex) (July 2022)